# EUROPÄISCHE PATENTSCHRIFT

(11) **EP 2 153 506 B1**
(45) Veröffentlichungstag und Bekanntmachung des Hinweises auf die Patenterteilung: **05.12.2012**
(21) Anmeldenummer: 08749224.5
(22) Anmeldetag: 29.04.2008
(51) Int. Cl.: H02K 3/12

(54) **WANDERFELDMASCHINE**
LINEAR MACHINE
MACHINE À ONDES PROGRESSIVES

(30) Priorität: 09.05.2007 DE 102007021737
(43) Veröffentlichungstag der Anmeldung: 17.02.2010
(73) Patentinhaber: Compact Dynamics GmbH, 82319 Starnberg (DE)
(72) Erfinder: GRÜNDL, Andreas, 82319 Starnberg (DE); HOFFMANN, Bernhard, 82319 Starnberg (DE)
(74) Vertreter: Schmidt, Steffen J.
(86) Internationale Anmeldenummer: PCT/EP2008/003468
(87) Internationale Veröffentlichungsnummer: WO 2008/138488

(56) Entgegenhaltungen:
- EP-A- 1 039 616
- WO-A-02/47239
- WO-A-2004/084377
- WO-A-2005/004308
- DE-C1- 10 143 217
- GB-A- 1 281 691

## Beschreibung

Nachstehend ist eine Wanderfeldmaschine beschrieben. Dabei handelt es sich zum Beispiel um eine Wanderfeldmaschine mit einem Ständer und einem Läufer, die jeweils wenigstens eine Ständerspule bzw. eine Läuferspule aufweisen, wobei der Ständer bzw. der Läufer einen weichmagnetischen Eisenkörper mit einem Ständer- bzw. Läuferrücken aufweist, an dem unter Bildung von Zähnen beabstandete Nuten ausgebildet sind.

### Begriffsdefinitionen

Unter dem Begriff "Wanderfeldmaschinen", also Asynchron-, Synchron-, Reluktanzmaschinen, permanent erregte elektrische Maschinen, etc. sind sowohl Motoren als auch Generatoren verstanden, wobei es unerheblich ist, ob eine solche Maschine als rund laufende Maschine oder zum Beispiel als Linearmotor ausgestaltet ist. Außerdem sind diese Wanderfeldmaschinen sowohl bei Innenläufermaschinen als auch bei Außenläufermaschinen einsetzbar.

### Hintergrund

Bei der Verminderung des Bauraums hocheffizienter elektrischer Maschinen spielt die Bauform und Anordnung der Leiter der Feldwicklungen eine entscheidende Rolle. Möglichst kurze Leiterlängen in den Wicklungsköpfen bei einer hohen Raumausnutzung vermindern die ohmschen Verluste und erhöhen die Leistungsdichte.

Da die ohmschen Verluste in der Ansteuerungsschaltung und in der (Stator-)Wicklung dem zu schaltenden Strom proportional sind, muss eine gewisse Leiterlänge im Magnetfeld bereitgestellt werden, um bei einem möglichst niederohmigen Leiteraufbau eine der gewünschten hohen Ansteuerspannung entsprechende induzierte Gegenspannung zu erzeugen.

Konventionelle elektrische Maschinen werden überwiegend mit kontinuierlichen Drähten - meist mit rundem Querschnitt - gewickelt. Ein dünner, flexibler Draht lässt sich zwar einfach in die Nuten einlegen, ein Nachteil besteht jedoch in der geringen Raumausnutzung in den Nuten und Wicklungsköpfen. Drähte mit rundem Leiterquerschnitt können die Querschnittsfläche der Nut nicht vollständig ausnutzen. Der Raum in den Wicklungsköpfen (also der Anteil der Wicklung, der nicht in einer der axial verlaufenden Nuten angeordnet ist,) kann dadurch ebenfalls nur unzureichend genutzt werden und die magnetisch nicht wirksame Leiterlänge, das Gesamtgewicht, der Raumbedarf und die ohmschen Verluste steigen an.

### Stand der Technik

Aus der EP 1 039 616 A2 ist eine Wanderfeldmaschine bekannt, deren Ständer eine Ständerspule trägt. Der Ständer hat einen weichmagnetischen Eisenkörper mit einem Ständerrücken an dem unter Bildung von Zähnen beabstandete Nuten ausgebildet sind. Die Ständerspulen haben jeweils einen in einer der Nuten angeordnete Leiterstab und an den Stirnseiten des Ständers angeordnete, die Leiterstäbe verbindende Stimverbinder. Die Leiterstäbe haben alle die gleiche axiale Länge. Die Stirnverbinder der Ständerspulen sind in einer Lage an den Stirnflächen des Ständers quer zum Nutengrund angeordnet. Die Stirnverbinder sind als symmetrische Teile gestaltet und überragen den Nutengrund abwechselnd in Richtung des Ständerrückens und zum Luftspalt der Wanderfeldmaschine hin. Die Stirnverbinder und die Leiterstäbe sind miteinander vernietet indem durch eine Öffnung im Stirnverbinder ein Niet in ein Loch in der Stirnseite des Leiterstabes gesteckt und vernietet wird. Diese Herstellungsweise ist sehr aufwendig.

Aus der DE 101 43 217 A1 ist eine Wanderfeldmaschine mit einem Ständer und einem Läufer bekannt, die jeweils wenigstens eine Ständerspule oder eine Läuferspule aufweisen. Der Ständer oder der Läufer haben einen weichmagnetischen Eisenkörper mit einem Ständer - oder Läuferrücken. An dem Rücken sind unter Bildung von Zähnen beabstandete Nuten ausgebildet. Die Ständer oder Läuferspulen haben in den Nuten angeordnete Leiterstäbe und an den Stirnseiten des Ständers oder Läufers angeordnete, die Leiterstäbe verbindende Stirnverbinder. Die Ständer oder Läuferspulen sind im Bereich der Stirnverbinder quer zum Grund der Nuten abgewinkelt sind und überragen den Grund der Nuten teilweise in Richtung des Ständer- oder Läuferrückens. Eine ähnliche Anordnung ist in der GB 1 281 691 gezeigt.

### Probleme des Standes der Technik

Den vorstehend erläuterten, bekannten Anordnungen haftet der Nachteil an, die Anforderungen an die Leistungsdichte und Zuverlässigkeit, wie sie in einigen Anwendungsbereichen gestellt werden, nur teilweise zu erfüllen. Außerdem ist die Montage der Stirnverbinder mit den Leiterstäben zur Bildung der Spulen aufwendig.

Die Ausgestaltung der Spulenköpfe ist ein für den Wirkungsgrad der elektrischen Maschine wesentlicher Faktor, wobei die bekannten Ausgestaltungen hinsichtlich der Erfordernisse einer Massenfertigung nicht für hoch-effiziente Maschinen optimiert sind. Ausserdem erlaubt zum Beispiel das in der EP 1 039 616 A2 beschriebene Konzepte nicht den Einsatz mehrlagiger Wicklungen, da hierbei die Stirnverbinder miteinander kollidieren würden.

### Lösung

Als Lösung dieser Probleme wird eine Wanderfeldmaschine mit einem Ständer und einem Läufer vorgeschlagen, die durch einen Luftspalt getrennt sind und jeweils wenigstens eine Ständerspule bzw. eine Läuferspule aufweisen. Der Ständer bzw. der Läufer hat einen weichmagnetischen Eisenkörper mit einem Ständer- bzw. Läuferrücken, an dem unter Bildung von Zähnen beabstandete Nuten ausgebildet sind. In den Nuten sind mehrere Leiterstäbe der Ständerspule bzw. der Läuferspule in Reihe angeordnet. An den Stirnseiten des Ständers bzw. Läufers sind die Leiterstäbe verbindende, über mehrere Nuten reichende Stirnverbinder vorhanden. Jeder Leiterstab hat zumindest an einem seiner Enden stirnseitig eine Ausnehmung. Jeder Stirnverbinder hat an seinem dem jeweiligen stirnseitigen Ende der Leiterstäbe zugewandten Abschnitt einen Fortsatz, der so angeordnet und dimensioniert ist, dass er in die jeweilige Ausnehmung des Leiterstabes elektrisch leitend einzugreifen eingerichtet ist. Der Fortsatz ist als Dorn ausgestaltet, der im Verhältnis zu der Ausnehmung mit einem Übermaß in radialer bzw. seitlicher Richtung versehen ist. Damit kann erreicht werden, dass der Fortsatz in der Ausnehmung in einem Press-Sitz aufgenommen ist.

Die Erfindung erlaubt eine maximale Ausnutzung des vorhandenen Raums (sowohl in axialer als auch in radialer bzw. seitlicher Richtung) bei gleichzeitiger Leistungsoptimierung der elektrischen Maschine mit sehr hoher Zuverlässigkeit im Betrieb bei geringen Herstellungskosten.

### Ausgestaltungen und Weiterbildungen der Erfindung

Die Ausnehmung kann als Sackloch mit im Wesentlichen rundem oder polygonalem Querschnitt ausgestaltet sein. Dabei kann sich der Querschnitt der Ausnehmung in Längsrichtung des Leiterstabes verändern. Die Ausnehmung kann sich verjüngen oder sie kann mit Widerhaken (zum Beispiel tannenbaumförmig) versehen sein.

Der Fortsatz kann mit einem im Wesentlichen runden oder polygonalen Querschnitt ausgestaltet sein.

An der Oberfläche des Fortsatzes und/oder der Ausnehmung kann zumindest teilweise ein Lotüberzug angeordnet sein. Der Lotüberzug kann ein Lotmaterial mit einem Schmelzpunkt über 200 Grad Celsius sein. Die Verbindung zwischen dem Leiterstab und dem Stirnverbinder kann auch - unabhängig von der konstruktiven Gestaltung des Endabschnittes des Leiterstabes und dem Endabschnitt des Stirnverbinders eine Schicht aus Hartlot, vorzugsweise Silberhartlot, Zinnhartlot oder dergl. aufweisen. Alternativ dazu kann die Verbindung zwischen Leiterstab und dem Stirnverbinder eine Schicht aus Hochtemperaturweichlot, vorzugsweise mit einem Schmelzpunkt von mindestens etwa 380 Grad Celsius haben.

Die Stirnverbinder können an ihren beiden Endbereichen mit Querabschnitten versehen sein, durch die sie (mittels der dornartigen Fortsätze und die gegengleich geformten Ausnehmungen) mit den Enden der Leiterstäbe verbunden sind. Die Länge der Querabschnitte bestimmt dabei wie weit die Wicklungsköpfe ausgehend von den Leiterstäben über den Rücken des Läufers oder Ständers reichen.

Die Leiterstäbe können an ihren Enden jeweils mit entsprechenden Abschnitten an den Stirnverbindern für eine mechanische und elektrische Verbindung zusammenpassend gestaltet sein. Die Ausgestaltung der mechanischen und elektrischen Verbindung kann dabei unterschiedlich realisiert sein. Wie vorstehend erläutert sind die Verbindungsbereiche an den Enden der Leiterstäbe bzw. der Querabschnitte der Stirnverbinder durch Ausnehmungen gebildet, in die die entsprechenden Abschnitte (Dome, Zapfen, Fortsätze) der Stirnverbinder gefügt sind. Die elektrische Verbindung/Kontaktierung kann durch Laser-Schweißen, Elektro-Impuls-Schweißen, durch Widerstandsschweißen, und/oder durch Aufschmelzen des / der Lotüberzüge hergestellt oder zumindest verbessert werden.

Die Querabschnitte an den beiden Endbereichen der Stirnverbinder zu den jeweiligen Enden der Leiterstäbe können unterschiedlich lang und/oder mit unterschiedlichem Winkel abgewinkelt sein.

Je nach dem, ob es sich bei der elektrischen Maschine um einen Innenläufer oder einen Außenläufer handelt, können die Nuten sich zu dem Luftspalt zwischen dem Ständer und dem Läufer hin verjüngen oder erweitern. Damit können die in den Nuten angeordneten Leiterstäbe abhängig von ihrer Position in der Nut eine an die Nutweite zumindest teilweise angepasste Breite aufweisen. Dies bietet die maximale Ausnutzung des verfügbaren Nutraums. Es kann dabei vorgesehen sein, die Leiterstäbe mit einem im Wesentlichen rechteckigen oder trapezförmigen Querschnitt zu versehen und den Ausnehmungen / Fortsätzen eine negative bzw. positive etwa kegelförmige oder etwa kegelstumpfförmige Gestalt zu verleihen. Es ist jedoch auch möglich, eine drei- oder mehreckige Pyramidenform oder eine drei - oder mehreckige Pyramidenstumpfform für die Ausnehmungen / Fortsätze einzusetzen. Anstatt den Ausnehmungen / Fortsätzen in deren Längsrichtung (Eingriffsrichtung) unterschiedliche Querabmessungen zu geben, sie also zum Beispiel kegelförmig, pyramidenförmig, oder dergl. zu gestalten, können die Ausnehmungen / Fortsätze auch eine zylindrische, zum Beispiel kreiszylindrische oder ovale, oder eine prismatische Form haben. Damit werden jeweils in axialer Richtung (also in deren Längsrichtung) definierte Abmessungen nach der Montage erreicht.

Eine gute Raumausnutzung kann dadurch erreicht werden, dass zumindest auf einer der beiden Stirnseiten des Ständers die Stirnverbinder nicht nur in Richtung des Ständerrückens, sondern auch in Richtung des Luftspaltes zwischen dem Ständer und dem Läufer hin angeordnet sind. In diesem Fall steigt die Länge der Leiterstäbe sowohl vom Ständerrücken, als auch vom Luftspalt zwischen Ständer und Läufer her zur Mitte der Wicklungskammer hin an.

Die Leiterstäbe und/oder die Stirnverbinder können mit einem Keramik- oder Email-Überzug versehen sein. Jeweils zwei der Teile (je ein Leiterstab und je ein Stirnverbinder) können zu einem im wesentlichen L-förmigen Bauteil zusammengefügt sein, vor dem Zusammenfügen oder daran anschließend mit dem Keramik- oder Email-Überzug versehen werden und dann lagenweise (von beiden Stirnseiten her) in die Nuten des weichmagnetischen Körpers eingebracht und dann zu den jeweiligen Wicklungen verbunden werden.

Weitere Merkmale, Eigenschaften, Vorteile und mögliche Abwandlungen werden für einen Fachmann anhand der nachstehenden Beschreibung deutlich, in der auf die beigefügte Zeichnung Bezug genommen ist.

In Fig. 1 ist eine schematische, perspektivische Explosionsansicht eines Ständers für eine elektrische Maschine veranschaulicht.

In Fig. 2a, 2b, 2c, 2d, und 2e sind mögliche Varianten der Stirnverbinder der elektrischen Maschine gemäß Fig. 1 in einer vergrößerten Darstellung veranschaulicht.

### Detaillierte Beschreibung bevorzugter Ausführungsformen

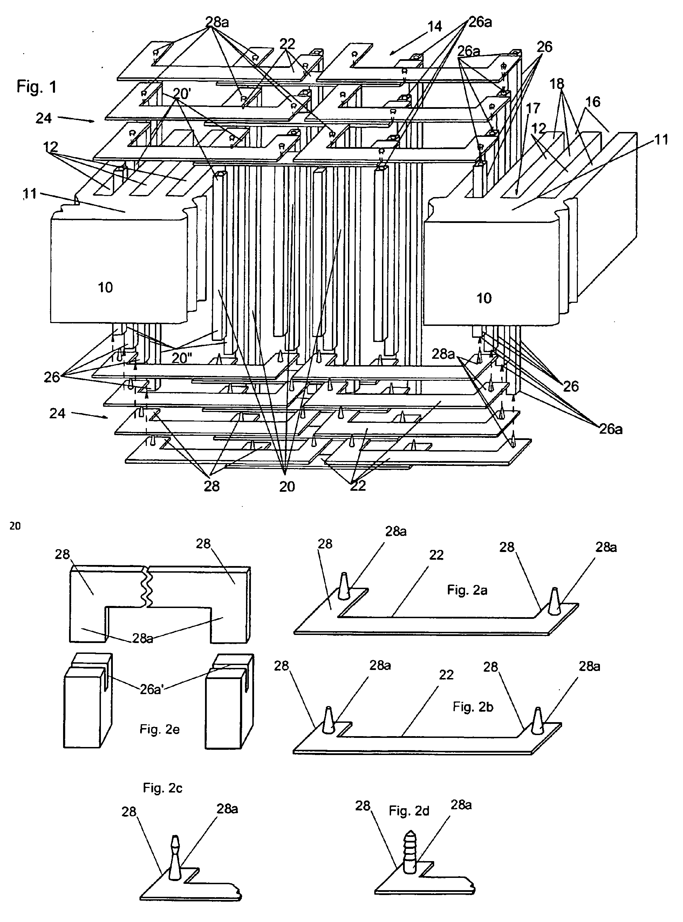

In Fig. 1 sind zwei unterbrochene Abschnitte einer Abwicklung eines Ständers 10 einer (nicht weiter veranschaulichten) Innenläufermaschine in einer Draufsicht gezeigt, wobei die Erfindung auch für eine Außenläufermaschine einsetzbar ist. Der Ständer 10 ist in der vorliegenden Ausführungsform aus (nicht weiter veranschaulichten) übereinandergestapelten Blechen aufgebaut, könnte aber auch aus zu der entsprechenden Form gepreßten und gesinterten Eisenpartikeln bestehen.

Der Ständer 10 mit einem Ständerrücken 11 hat nebeneinander angeordnete Nuten 12, durch die Wicklungskammern für die entsprechenden Ständerspulenwicklungen 14 gebildet sind. In der gezeigten Ausführungsform haben die Wicklungskammern 12 einen im wesentlichen rechteckigen Querschnitt, wobei sie an ihrer dem (nicht gezeigten) Läufer zugewandten Seite Schlitze 16 haben. Jeweils zwischen zwei Schlitzen 16 ist damit ein Zahn 18 gebildet.

Jede Ständerspule 14 ist aus im Querschnitt im wesentlichen rechteckigen Leiterstäben 20 gebildet, welche in die Wicklungskammern 12 eingebracht sind und mit Stirnverbindern 22 verbunden sind. Die Stirnverbinder 22 aller Wicklungen bilden zusammen Wicklungsköpfe 24 an beiden Stirnflächen des Ständers 10. Der besseren Übersicht wegen sind einige der Ständerspulen 14 weggelassen und auch der Ständer 10 in zwei Abschnitten mit einer Unterbrechung dargestellt.

Die Stirnverbinder 22 sind im wesentlichen quer zum Grund 17 der Nuten 16 - bezogen auf die Längsachse der Leiterstäbe 20 - orientiert und überragen den Grund 17 der Nuten 16 teilweise in Richtung des Ständerrückens 11. Dabei haben die Stirnverbinder 22 relativ zur Stirnfläche des Ständers 10 bzw. Läufers eine im wesentlichen parallele Orientierung.

Die Stirnverbinder 22 sind an einem oder an beiden ihrer Endbereiche mit den Enden 26 der Leiterstäbe 20 durch quer zur Längsachse der Leiterstäbe 20 orientierte Querabschnitte 28 verbunden (siehe auch Fig. 2a und 2b). Die Querabschnitte können entweder - wie in der Fig. 1 gezeigt - Teil des Stirnverbinders 22, oder Teil des jeweiligen Leiterstabes 20 sein.

Wie insbesondere in Fig. 1 und 2a zu sehen ist, sind die Querabschnitte 28 an den beiden Endbereichen der Stirnverbinder 22 zu den jeweiligen Enden 26 der Leiterstäbe 20 unterschiedlich lang um die jeweilige Relativ-Position des Stirnverbinders 22 im Wickelkopf 24 zu erreichen. Die Querabschnitte 28 haben jeweils einen sich zu seinem freien Ende hin konisch verjüngenden kegelstumpfförmigen Dorn 28a. Dieser Dorn 28a ist in eine im Wesentlichen gegengleich geformte Ausnehmung im jeweiligen (in Fig. 1 oberen und unteren) Ende 26 der Leiterstäbe 20 einzuführen. Der Dorn, genauer gesagt der Stirnverbinder 22, ist damit elektrisch und mechanisch mit dem jeweiligen Leiterstab verbunden.

Wenn der Dorn bezogen auf die Ausnehmung zumindest teilweise ein Übermaß (etwa 1 - 10%) hat, erhöht dies die Stabilität der Anordnung nach erfolgter Montage.

Um die Verbindung sowohl elektrisch als auch mechanisch noch sicherer, niederohmiger und fester zu gestalten, kann an jedem Dorn und/oder jeder Ausnehmung ein Lotdepot 50 in Form eines Lotüberzuges oder eines Lotkörpers oder dergl. vorgesehen sein. Dieses Lotdepot 50 kann durch Beschicken des jeweiligen Leiterstabes 20 und des mit ihm verbundenen Stirnverbinders 22 mit einem hohen Strom zum Schmelzen gebracht werden, da an Stellen mit erhöhtem elektrischem Widerstand ein lokales Wärmenest entsteht. Dieses Wärmenest bringt das Lot zum Schmelzen und verringert so den elektrischen Widerstand. Im Übrigen erhöht eine Lotverbindung auch die mechanische Festigkeit der Anordnung.

Die Abmessungen sind in etwa so gewählt, dass der Querschnitt am Fußpunkt des Dorns (also an der Stelle, an der der Dorn an dem Stirnverbinder angeformt ist) annähernd etwa 30 % - 100 % des Querschnitts des Stirnverbinders beträgt.

In Fig. 2a ist einer der in Fig. 1 am oberen Ende der Leiterstäbe 20 angeordneten Stirnverbinder 22 mit unterschiedlich langen Querabschnitten 28 veranschaulicht.

In Fig. 2b ist einer der in Fig. 1 am unteren Ende der Leiterstäbe 20 angeordneten Stirnverbinder 22 mit gleichlangen Querabschnitten 28 veranschaulicht.

In den Fig. 2c, 2d sind alternative Ausgestaltungen von Domen gezeigt, die in entsprechend geformte Ausnehmungen der Leiterstäbe einzufügen sind.

In Fig. 2e ist eine weitere alternative Ausgestaltung der Ausnehmung am oberen Ende der Leiterstäbe 20 gezeigt, nämlich ein seitlich offener Schlitz 26a' am stirnseitigen Ende der Leiterstäbe 20. Der Schlitz 26a' kann auch seitlich geschlossen realisiert sein. In jeden Schlitz 26a' greift ein im Wesentlichen gegengleich geformter Fortsatz 28a ein, der in der gezeigten Variante von dem Stirnverbinder 22 in dessen Verlängerung absteht. Bei den anderen Varianten steht der Dorn von dem Stirnverbinder seitlich ab.

Die Stirnverbinder 22 reichen - abhängig von der Phasenzahl und der Lochzahl der elektrischen Maschine - über mehrere Nuten 16. Jeweils in einer Nut zueinander benachbart angeordnete Leiterstäbe 20 haben unterschiedlich lange, die Stirnseiten des Ständers 10 bzw. Läufers überragende Leiterabschnitte 20', 20 ". In der in Fig. 1 gezeigten Ausführungsform nimmt die Länge der Leiterabschnitte 20', 20 " vom Ständerrücken 11 zum freien Ende der Zähne 18 (mit anderen Worten zum Luftspalt der elektrischen Maschine) hin zu. In entsprechender Weise sind die Stirnverbinder 22 vom Ständerrücken 11 ausgehend zu den Zähnen 18 hin anwachsend treppenartig übereinander geschichtet an den Stirnseiten des Ständers 10 angeordnet.

Wie in Fig. 1 ebenfalls gezeigt überlappen sich Stirnverbinder einer Wicklung mit Stirnverbindern einer weiteren Wicklung auch in seitlicher Richtung (in Fig. 1 zum Beispiel von Links nach Rechts). Dabei bilden die Stirnverbinder 22 mit den beiden kürzesten Leiterstäbe 20n (in Fig. 1 vorne) einer Wicklung 14 jeweils die unterste Lage, die von den Stirnverbindern der nachvolgenden, zweitkürzesten Leiterstäbe 20 dieser Wicklung 14 treppenartig (in Fig. 1 nach hinten) überlagert wird. Dieser Aufbau wiederholt sich bis zu den längsten Leiterstäben 20 (in Fig. 1 ganz hinten) dieser Wicklung 14. Zwischen die Stirnverbinder 22 einer Wicklung 14 ragen seitlich abgestuft die Stirnverbinder 22 weiterer Wicklungen 14 hinein.

Die in ihrer Länge stufenförmig anwachsenden Leiterstäbe in jeder Nut und die einander sowohl in Längsrichtung der Nuten treppenartig übergreifenden Stirnverbinder einer Wicklung als auch die einander in Richtung quer zu den Nuten schuppenartig durchdringenden Stirnverbinder benachbarter Wicklungen bilden eine sehr kompakte und raumsparende Anordnung der Wickelköpfe der elektrischen Maschine.

Die in den Fig. gezeigten Verhältnisse der einzelnen Teile und Abschnitte hiervon zueinander und deren Materialdicken sind nicht einschränkend zu verstehen. Vielmehr können einzelne Abmessungen auch von den gezeigten abweichen. Außerdem versteht es sich, daß die in den Fig. gezeigten Ausführungsformen für rund laufende Maschinen, also Innen- oder Außenläufermaschinen, entsprechend um eine Rotationsachse anzuordnen bzw. zu krümmen sind.

## Patentansprüche

1. Wanderfeldmaschine mit einem Ständer (10) und einem Läufer, die durch einen Luftspalt getrennt sind und jeweils wenigstens eine Ständerspule (14) bzw. eine Läuferspule aufweisen, wobei
- der Ständer (10) bzw. der Läufer einen weichmagnetischen Eisenkörper mit einem Ständer- (11) bzw. Läuferrücken aufweist, an dem unter Bildung von Zähnen (18) beabstandete Nuten (16) ausgebildet sind, und
- in den Nuten (16) mehrere Leiterstäbe (20) der Ständerspule (14) bzw. der Läuferspule in Reihe angeordnet sind und an den Stirnseiten des Ständers (10) bzw. Läufers angeordnete, die Leiterstäbe (20) verbindende, über mehrere Nuten (16) reichende Stirnverbinder (22) aufweisen, wobei
- jeder Leiterstab (20) zumindest an einem seiner Enden stirnseitig eine Ausnehmung (26a) aufweist, **dadurch gekennzeichnet, dass**
- jeder Stirnverbinder (22) an seinem dem jeweiligen stirnseitigen Ende der Leiterstäbe (20) zugewandten Abschnitt einen Fortsatz (28a) aufweist, der so angeordnet und dimensioniert ist, dass er in die jeweilige Ausnehmung (26a) des Leiterstabes (20) elektrisch leitend einzugreifen eingerichtet ist, wobei
- der Fortsatz (28a) als Dorn ausgestaltet ist, der im Verhältnis zu der Ausnehmung (26a) mit einem Übermaß in radialer bzw. seitlicher Richtung versehen ist.

2. Wanderfeldmaschine nach Anspruch 1, wobei
- die Ausnehmung als Sackloch (26a) mit im Wesentlichen rundem oder polygonalem Querschnitt ausgestaltet ist, oder
- die Ausnehmung als seitlich offener oder seitlich geschlossener Schlitz (26a') ausgestaltet ist.

3. Wanderfeldmaschine nach Anspruch 1 oder 2, wobei
- der Dorn (28a) mit einem im Wesentlichen runden oder polygonalen Querschnitt ausgestaltet ist.

4. Wanderfeldmaschine nach einem der Ansprüche 1 - 3, wobei
- der Fortsatz (28a) in der Ausnehmung in einem Press-Sitz aufgenommen ist.

5. Wanderfeldmaschine nach einem der Ansprüche 1 - 4, wobei
- an dem Fortsatz (28a) oder in der Ausnehmung zumindest teilweise ein Lotüberzug angeordnet ist.

6. Wanderfeldmaschine nach Anspruch 5, wobei
- der Lotüberzug ein Lotmaterial mit einem Schmelzpunkt über 200 °C ist.

7. Wanderfeldmaschine nach einem der Ansprüche 1 - 6, wobei
- in jeder der Nuten (16) jeweils zueinander benachbart angeordnete Leiterstäbe (20a, 20b) unterschiedlich lange, die Stirnseiten des Ständers (10) bzw. Läufers überragende Leiterabschnitte aufweisen, und
- die Stirnverbinder (22) zumindest teilweise in axialer Richtung treppenartig geschichtet an den Stirnseiten des Ständers (10) bzw. Läufers angeordnet sind.

8. Wanderfeldmaschine nach einem der vorherigen Ansprüche, wobei
- die Stirnverbinder (22) einen im Wesentlichen rechteckigen Querschnitt haben, wobei jeder Fortsatz (28a) von dem Stirnverbinder (22) seitlich oder in dessen Verlängerung absteht.

9. Wanderfeldmaschine nach einem der vorherigen Ansprüche, wobei
- die Stirnverbinder (22) an ihren beiden Endbereichen mit den Enden (26) der Leiterstäbe (20) durch Querabschnitte (28) verbunden sind.

10. Wanderfeldmaschine nach einem der vorherigen Ansprüche, wobei
- die Querabschnitte (28) an den beiden Endbereichen der Stirnverbinder (22) zu den jeweiligen Enden (26) der Leiterstäbe (20) unterschiedlich lang und/oder mit unterschiedlichem Winkel abgewinkelt sind.

11. Wanderfeldmaschine nach einem der vorherigen Ansprüche, wobei
- die Leiterstäbe (20) an ihren Enden jeweils einen Verbindungsbereich aufweisen, der mit entsprechenden Abschnitten an den Stirnverbindern (22) für eine mechanische und elektrische Verbindung zusammenpasst.

12. Wanderfeldmaschine nach einem der vorherigen Ansprüche, wobei
- die Verbindungsbereiche an den Enden der Leiterstäbe (20) mit entsprechend geformten Fortsätze (28a) (28a) der Querabschnitte (28) gefügt und/oder verschweißt, oder verlötet sind.

13. Wanderfeldmaschine nach einem der vorherigen Ansprüche, wobei
- die Endabschnitte der Stirnverbinder mit den Endabschnitten des Leiterstabes durch Laserschweißen materialschlüssig verbunden sind.

14. Wanderfeldmaschine nach einem der vorherigen Ansprüche, wobei
- die Nuten sich zu einem Luftspalt zwischen dem Ständer und dem Läufer hin verjüngen oder erweitern und
- die in den Nuten angeordneten Leiterstäbe abhängig von ihrer Position in der Nut eine an die Nutweite zumindest teilweise angepasste Breite aufweisen.

15. Wanderfeldmaschine nach einem der vorherigen Ansprüche, wobei
- zumindest auf einer der beiden Stirnseiten des Ständers die Stirnverbinder in Richtung des Ständerrückens und in Richtung des Luftspaltes zwischen dem Ständer und dem Läufer hin angeordnet sind, wobei
- die Länge der Leiterstäbe sowohl vom Ständerrücken, als auch vom Luftspalt zwischen Ständer und Läufer her zur Mitte der Nuten hin ansteigt.

## Claims

1. Linear machine with a stator (10) and a rotor, which are separated by an air gap and have at least one stator coil (14) and/or one rotor coil respectively, wherein
- the stator (10) or rotor has a soft magnetic iron body with a stator back (11) or rotor back, on which grooves (16) are formed at a distance from each other, forming teeth (18), and
- in the grooves (16), multiple conductor bars (20) of the stator coil (14) or rotor coil are arranged in rows, and have, on the faces of the stator (10) or rotor, end connectors (22) which connect the conductor bars (20) and extend over multiple grooves (16), and wherein
- each conductor bar (20) has a cavity (26a) on the face of at least one of its ends, **characterized in that**
- each end connector (22) has an extension (28a), which is arranged and dimensioned in such a way as to engage in an electrically conducting manner into the respective cavity (26a) of the conductor bar (20), on its section facing the respective front end of the conductor bars (20), and wherein
- the extension (28a) is in the form of a mandrel, which in relation to the cavity (26a) is provided with an excess in the radial or lateral direction.

2. Linear machine according to Claim 1, wherein
- the cavity is in the form of a blind hole (26a), with essentially round or polygonal cross-section, or
- the cavity is in the form of a laterally open or laterally closed slot (26a').

3. Linear machine according to Claim 1 or 2, wherein
- the mandrel (28a) is formed with an essentially round or polygonal cross-section.

4. Linear machine according to one of Claims 1 - 3, wherein
- the extension (28a) is received in the cavity in an interference fit.

5. Linear machine according to one of Claims 1 - 4, wherein
- a coating of solder is at least partly arranged on the extension (28a).

6. Linear machine according to Claim 5, wherein
- the coating of solder is a solder material with a melting point above 200 °C.

7. Linear machine according to one of Claims 1 - 6, wherein
- in each of the grooves (16), conductor bars (20a, 20b) which are arranged adjacently to each other have conductor sections which are of different lengths and project beyond the faces of the stator (10) or rotor, and
- the end connectors (22) are arranged at least partly in stepped layers in the axial direction on the faces of the stator (10) or rotor.

8. Linear machine according to one of the preceding claims, wherein
- the end connectors (22) have an essentially rectangular cross-section, each extension (28a) being at a distance from the end connector (22) laterally or in its prolongation.

9. Linear machine according to one of the preceding claims, wherein
- the end connectors (22) are connected at their two end regions to the ends (26) of the conductor bars (20) by transverse sections (28).

10. Linear machine according to one of the preceding claims, wherein
- the transverse sections (28) at both end regions of the end connectors (22) to the ends (26) of the conductor bars (20) are of different lengths and/or angled at different angles.

11. Linear machine according to one of the preceding claims, wherein
- the conductor bars (20) each have at their ends a connecting area, which fits together with corresponding sections on the end connectors (22) for mechanical and electrical connection.

12. Linear machine according to one of the preceding claims, wherein
- the connecting areas at the ends of the conductor bars (20) are joined and/or welded or soldered to correspondingly shaped extensions (28a)(28a) of the transverse sections (28).

13. Linear machine according to one of the preceding claims, wherein
- the end sections of the end connectors are joined coalescently by laser welding to the end sections of the conductor bar.

14. Linear machine according to one of the preceding claims, wherein
- the grooves taper or widen towards an air gap between the stator and rotor, and
- the conductor bars arranged in the grooves, depending on their position in the groove, have a width which is at least partly adapted to the groove width.

15. Linear machine according to one of the preceding claims, wherein
- the end connectors, at least on one of the two faces of the stator, are arranged in the direction of the stator back and in the direction of the air gap between the stator and rotor,
- the length of the conductor bars increasing both from the stator back and from the air gap between the stator and rotor to the centre of the grooves.

## Revendications

1. Machine à champ d'ondes progressives comprenant un stator (10) et un rotor qui sont séparés par un entrefer et présentent chacun respectivement au moins une bobine de stator (14) ou une bobine de rotor, dans laquelle
- le stator (10) ou le rotor présente un corps de fer magnétique doux avec un dos de stator (11) ou un dos de rotor, dans lequel des rainures (16) espacées les unes des autres sont réalisées en formant des dents (18), et
- plusieurs barreaux conducteurs (20) de la bobine de stator (14) ou de la bobine de rotor sont alignés dans les rainures (16) et présentent des connecteurs frontaux (22) agencés au niveau des côtés frontaux du stator (10) ou du rotor, reliant les barreaux conducteurs (20) et s'étendant par-delà plusieurs rainures (16),
- chaque barreau conducteur (20) présentant frontalement un évidement (26a) à au moins l'une de ses extrémités,
**caractérisée en ce que**
- chaque connecteur frontal (22) présente au niveau de sa partie dirigée vers l'extrémité frontale respective des barreaux conducteurs (20) un appendice (28a) qui est agencé et dimensionné de manière à pouvoir venir s'engager dans l'évidement (26a) respectif du barreau conducteur (20), en assurant une liaison électriquement conductrice avec ce dernier,
- l'appendice (28a) étant réalisé sous forme d'un tenon, qui est surdimensionné par rapport à l'évidement (26a), dans la direction radiale ou latérale.

2. Machine à champ d'ondes progressives selon la revendication 1, dans laquelle
- l'évidement est configuré sous forme d'un trou borgne (26a) de section transversale sensiblement ronde ou polygonale, ou
- l'évidement est configuré sous forme d'une rainure (26a') ouverte latéralement ou fermée latéralement.

3. Machine à champ d'ondes progressives selon la revendication 1 ou la revendication 2, dans laquelle
- le tenon (28a) est d'une configuration à section transversale sensiblement ronde ou polygonale.

4. Machine à champ d'ondes progressives selon l'une des revendications 1 à 3, dans laquelle
- l'appendice (28a) est reçu dans l'évidement selon un ajustement serré.

5. Machine à champ d'ondes progressives selon l'une des revendications 1 à 4, dans laquelle
- une couche de métal d'apport de brasage est menagée au moins partiellement sur l'appendice (28a) ou dans l'évidement.

6. Machine à champ d'ondes progressives selon la revendication 5, dans laquelle
- la couche de métal d'apport de brasage est un matériau de brasage ayant un point de fusion supérieure à 200 °C.

7. Machine à champ d'ondes progressives selon l'une des revendications 1 à 6, dans laquelle
- les barreaux conducteurs (20a, 20b) agencés respectivement de manière adjacente les uns des autres, présentent, dans chacune des rainures (16), des tronçons conducteurs de longueur différente dépassant des côtés frontaux du stator (10) ou du rotor, et
- les connecteurs frontaux (22) sont agencés, au moins en partie sur les côtés frontaux du stator (10) ou du rotor, en étant superposés en échelons dans la direction axiale.

8. Machine à champ d'ondes progressives selon l'une des revendications précédentes, dans laquelle
- les connecteurs frontaux (22) ont une section transversale sensiblement rectangulaire, chaque appendice (28a) faisant saillie du connecteur frontal (22) latéralement ou dans son prolongement.

9. Machine à champ d'ondes progressives selon l'une des revendications précédentes, dans laquelle
- les connecteurs frontaux (22) sont reliés, au niveau de leurs deux zones d'extrémité, aux extrémités (26) des barreaux conducteurs (20), par l'intermédiaire de tronçons transversaux (28).

10. Machine à champ d'ondes progressives selon l'une des revendications précédentes, dans laquelle
- les tronçons transversaux (28), au niveau des deux zones d'extrémité des connecteurs frontaux (22), sont coudés vers les extrémités (26) respectives des barreaux conducteurs (20), avec une longueur différente et/ou avec un angle différent.

11. Machine à champ d'ondes progressives selon l'une des revendications précédentes, dans laquelle
- les barreaux conducteurs (20) présentent à chacune de leurs extrémités une zone de connexion qui est adaptée à des tronçons correspondants au niveau des connecteurs frontaux (22) pour réaliser une connexion mécanique et électrique.

12. Machine à champ d'ondes progressives selon l'une des revendications précédentes, dans laquelle
- les zones de connexion aux extrémités des barreaux conducteurs (20) sont aboutées et/ou soudées, ou brasées avec des appendices (28a) (28a) de forme appropriée des tronçons transversaux (28).

13. Machine à champ d'ondes progressives selon l'une des revendications précédentes, dans laquelle
- les tronçons d'extrémité des connecteurs frontaux sont reliés aux tronçons d'extrémité du barreau conducteur par soudage au laser en continuité de matière.

14. Machine à champ d'ondes progressives selon l'une des revendications précédentes, dans laquelle
- les rainures se rétrécissent ou s'évasent en direction d'un entrefer entre le stator et le rotor, et
- les barreaux conducteurs agencés dans les rainures présentent, en fonction de leur position dans la rainure, une largeur adaptée, au moins partiellement, à la largeur de rainure.

15. Machine à champ d'ondes progressives selon l'une des revendications précédentes, dans laquelle
- sur au moins l'un des deux côtés frontaux du stator, les connecteurs frontaux sont agencés en direction du dos de stator et en direction de l'entrefer entre le stator et le rotor,
- la longueur des barreaux conducteurs augmentant aussi bien à partir du dos de stator qu'à partir de l'entrefer entre stator et rotor, en direction du milieu des rainures.
